# EUROPEAN PATENT APPLICATION

(11) **EP 1 427 246 A1**
(43) Date of publication of application: **09.06.2004**
(21) Application number: 02765343.5
(22) Date of filing: 22.08.2002
(51) Int. Cl.: H04Q 9/00

(54) **DIAGNOSIS SYSTEM, DIAGNOSIS METHOD, DIAGNOSIS TERMINAL, AND DIAGNOSIS TERMINAL USING METHOD**

(30) Priority: 24.08.2001 JP 2001254671
(71) Applicant: Daikin Industries, Ltd., Osaka-shi, Osaka 530-8323 (JP)
(72) Inventor: IMADA, Nobuhiro, c/o Daikin Industries, Ltd., Sakai-shi, Osaka 591-8511 (JP)
(74) Representative: HOFFMANN - EITLE
(86) International application number: PCT/JP2002/008452
(87) International publication number: WO 2003/030580

(57) **Abstract**

A fault diagnosis program (51) necessary for diagnosing a fault of a diagnosis object equipment (1) is supplied from a fault diagnosis database (4) to a diagnosis terminal (2). The diagnosis object equipment (1), the diagnosis terminal (2) and the fault diagnosis database (4) are provided separately from each other. It is sufficient to obtain only the fault diagnosis program (51) corresponding to the model or fault part of the diagnosis object equipment (1) from the fault diagnosis database (4) to the diagnosis terminal (2). The fault diagnosis program (51), which is proposed after the diagnosis object equipment (1) is manufactured, can be also stored in the fault diagnosis database (4) and can be supplied to the diagnosis terminal (2). The diagnosis terminal (2) executes the supplied fault diagnosis program (51), thereby diagnosing a fault in the diagnosis object equipment (1).

## Description

### TECHNICAL FIELD

The present invention relates to a technique of diagnosing an object to be diagnosed.

### BACKGROUND ART

For example, in order to diagnose an air conditioner, there is a technique of monitoring the operation apart from the air conditioner or, further, diagnosing the air conditioner. According to the technique, a diagnosis program used in diagnosis does not have to be stored in the air conditioner itself. Therefore, diagnosis can be carried out without adding a function to the air conditioner, so that the cost of the air conditioner itself can be reduced.

However, a device for carrying out diagnosis naturally has to have a diagnosis program. On the other hand, a number of models exists for the air conditioners and parts to be diagnosed are various. For example, different diagnosis programs are used to diagnose faults for the case where a compressor in an air conditioner fails and the case where an electric expansion valve fails.

Consequently, a great number of diagnosis programs have to be stored in the device for carrying out diagnosis. It is therefore difficult to reduce the cost of the device and portability is poor. It is naturally desirable that the device for an equipment like an air conditioner, failure of which is to be repaired where actually installed, has excellent portability.

### DISCLOSURE OF THE INVENTION

An object of the present invention is to provide a technique of reducing the number of diagnosis programs to be stored in a device for carrying out diagnosis, improving portability of the device, and reducing the cost of the device.

A first aspect of a diagnosis system according to the present invention comprises: a diagnosis object equipment (1), as an object of diagnosis, capable of transmitting diagnosis information (42) as information regarding the diagnosis of the diagnosis object equipment itself; a diagnosis database (4), which is separate from the diagnosis object equipment, for storing a plurality of diagnosis programs (51) used in carrying out the diagnosis on the diagnosis object equipment; and a diagnosis terminal (2), which is separate each from the diagnosis object equipment and the diagnosis database, for obtaining the diagnosis program from the diagnosis database on the basis of the diagnosis information, and carries out the diagnosis by using the diagnosis program.

In a second aspect of the diagnosis system according to the present invention, in the first aspect of the diagnosis system, the diagnosis information (42) includes information of identifying a model of the diagnosis object equipment (1), and the diagnosis program (51) obtained from the diagnosis database (4) to the diagnosis terminal (2) corresponds to the model of the diagnosis object equipment.

In a third aspect of the diagnosis system according to the present invention, in the first aspect of the diagnosis system, the diagnosis information (42) includes information of identifying a diagnosis part in the diagnosis object equipment (1), and the diagnosis program (51) obtained from the diagnosis database (4) to the diagnosis terminal (2) corresponds to the diagnosis part in the diagnosis object equipment.

In a fourth aspect of the diagnosis system according to the present invention, in the third aspect of the diagnosis system, the diagnosis program (51) tests operation of the diagnosis part.

In a fifth aspect of the diagnosis system according to the present invention, in any one of the first to fourth aspects of the diagnosis system, the diagnosis object equipment (1) transmits a status signal (53) indicative of the status of itself to the diagnosis terminal (2) in response to a request from the diagnosis program (51).

A first aspect of a diagnosis method according to the present invention comprises steps of: (a) transmitting diagnosis information (42) as information regarding diagnosis on a diagnosis object equipment (1) as an object of diagnosis from the diagnosis object equipment to a diagnosis terminal (2) which is separate from the diagnosis object equipment (S2); (b) sending a request for transmission of a diagnosis program (51) used in carrying out the diagnosis from the diagnosis terminal to a diagnosis database (4) which is separate from each of the diagnosis object equipment and the diagnosis terminal (S3); (c) transmitting the diagnosis program corresponding to the diagnosis information from the diagnosis database to the diagnosis terminal (S4); and (d) carrying out the diagnosis by the diagnosis terminal by using the diagnosis program obtained in the step (c) (S5,S6).

In a second aspect of the diagnosis method according to the present invention, in the first aspect of the diagnosis method, the diagnosis information (42) includes information of identifying a model of the diagnosis object equipment (1), and the diagnosis program (51) transmitted from the diagnosis database (4) to the diagnosis terminal (2) corresponds to the model of the diagnosis object equipment.

In a third aspect of the diagnosis method according to the present invention, in the first aspect of the diagnosis method, the diagnosis information (42) includes information of identifying a diagnosis part in the diagnosis object equipment (1), and the diagnosis program (51) transmitted from the diagnosis database (4) to the diagnosis terminal (2) corresponds to the diagnosis part in the diagnosis object equipment.

In a fourth aspect of the diagnosis method according to the present invention, in the third aspect of the diagnosis method, the diagnosis program (51) tests operation of the diagnosis part.

In a fifth aspect of the diagnosis method according to the present invention, in any one of the first to fourth aspects of the diagnosis method, the diagnosis object equipment (1) transmits a status signal (53) indicative of the status of itself to the diagnosis terminal in response to a request from the diagnosis program (51).

In the first aspect of a diagnosis terminal (2) of the present invention, the diagnosis terminal receives diagnosis information (42) as information regarding diagnosis on a diagnosis object equipment (1) from the diagnosis object equipment, receives a diagnosis program obtained on the basis of the diagnosis information from a diagnosis database (4) which is separate from said diagnosis object equipment and stores a plurality of the diagnosis programs, and carries out the diagnosis on the diagnosis object equipment by using the diagnosis program. The diagnosis terminal is separate from the diagnosis object equipment and the diagnosis database.

In a second aspect of the diagnosis terminal according to the present invention, in the first aspect of the diagnosis terminal, the diagnosis information (42) includes information of identifying a model of the diagnosis object equipment (1), and the diagnosis program (51) obtained from the diagnosis database (4) to the diagnosis terminal (2) corresponds to the model of the diagnosis object equipment.

In a third aspect of the diagnosis terminal according to the present invention, in the first aspect of the diagnosis terminal, the diagnosis information (42) includes information of identifying a diagnosis part in the diagnosis object equipment (1), and the diagnosis program (51) obtained from the diagnosis database (4) to the diagnosis terminal (2) corresponds to the diagnosis part in the diagnosis object equipment.

In a fourth aspect of the diagnosis terminal according to the present invention, in the third aspect of the diagnosis terminal, the diagnosis program (51) tests operation of the diagnosis part.

In a fifth aspect of the diagnosis terminal according to the present invention, in any one of the first to fourth aspects of the diagnosis terminal, the diagnosis object equipment (1) transmits a status signal (53) indicative of the status of itself to the diagnosis terminal (2) in response to a request from the diagnosis program (51).

A first aspect of a method of using a diagnosis terminal (2) according to the present invention comprises steps of: (a) receiving diagnosis information (42) as information regarding diagnosis on a diagnosis object equipment (1) as an object of the diagnosis from the diagnosis object equipment (S2); (b) sending a request of transmission of a diagnosis program (51) used at the time of carrying out the diagnosis to a diagnosis database (4) which is separate from the diagnosis object equipment (S3); (c) receiving the diagnosis program corresponding to the diagnosis information from the diagnosis database (S4); and (d) carrying out the diagnosis by using the diagnosis program obtained in step (c) (S5,S6). The diagnosis terminal (2) is separate each from the diagnosis object equipment and said diagnosis database.

In a second aspect of the method of using a diagnosis terminal according to the present invention, in the first aspect of the method of using a diagnosis terminal, the diagnosis information (42) includes information of identifying a model of the diagnosis object equipment (1), and the diagnosis program (51) received from the diagnosis database (4) corresponds to the model of the diagnosis object equipment.

In a third aspect of the method of using a diagnosis terminal according to the present invention, in the first aspect of the method of using a diagnosis terminal, the diagnosis information (42) includes information of identifying a diagnosis part in the diagnosis object equipment (1), and the diagnosis program (51) received from the diagnosis database (4) corresponds to the diagnosis part in the diagnosis object equipment.

In a fourth aspect of the method of using a diagnosis terminal according to the present invention, in the third aspect of the method of using a diagnosis terminal, the diagnosis program (51) tests operation of the diagnosis part.

In a fifth aspect of the method of using a diagnosis terminal according to the present invention, in any one of the first to fourth aspects of the method of using a diagnosis terminal of the present invention, the diagnosis object equipment (1) transmits a status signal (53) indicative of the status of itself to the diagnosis terminal in response to a request from the diagnosis program (51).

According to the first aspect of each of the diagnosis system, diagnosis method, diagnosis terminal, and the method of using a diagnosis terminal according to the present invention, since the diagnosis object equipment is provided separately from the diagnosis database, it is unnecessary to provide the diagnosis object equipment with the function of carrying out diagnosis. Therefore, the cost of the diagnosis object equipment can be reduced. Since the diagnosis terminal is separate from the diagnosis database, the diagnosis terminal does not have to store a number of diagnosis programs. Thus, portability is excellent and the cost can be reduced. Moreover, since each of the diagnosis database and the diagnosis terminal is separate from the diagnosis object equipment, even with respect to diagnosis contents which are not expected to be diagnosed in manufacturing the diagnosis object equipment, a new diagnosis program can be employed to carry out diagnosis by using the diagnosis database and the diagnosis terminal.

According to the second aspect of each of the diagnosis system, diagnosis method, diagnosis terminal, and the method of using a diagnosis terminal according to the present invention, the diagnosis terminal can obtain a necessary diagnosis program in correspondence with any of a plurality of kinds of diagnosis object equipment from the diagnosis database and carry out diagnosis.

According to each of the third and fourth aspects of each of the diagnosis system, diagnosis method, diagnosis terminal, and the method of using a diagnosis terminal according to the present invention, the diagnosis terminal can obtain a necessary diagnosis program in correspondence with any of a plurality of kinds of diagnosis parts from the diagnosis database and carry out diagnosis.

Since a status signal is obtained as in the fifth aspect of each of the diagnosis system, diagnosis, method, diagnosis terminal, and the method of using a diagnosis terminal according to the present invention, the status signal can be compared with, for example, data in a normal status included in the diagnosis program.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a conceptual diagram illustrating a fault diagnosis system according to an embodiment of the present invention.
FIG. 2 is a flowchart showing the operation of the fault diagnosis system according to an embodiment of the present invention.
FIG. 3 is a conceptual diagram illustrating a fault diagnosis system according to a modification of the present embodiment.

### BEST MODE FOR CARRYING OUT THE INVENTION

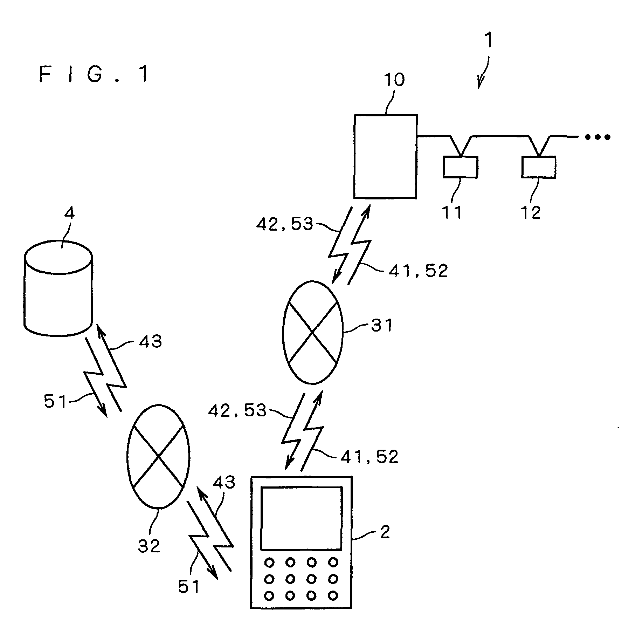

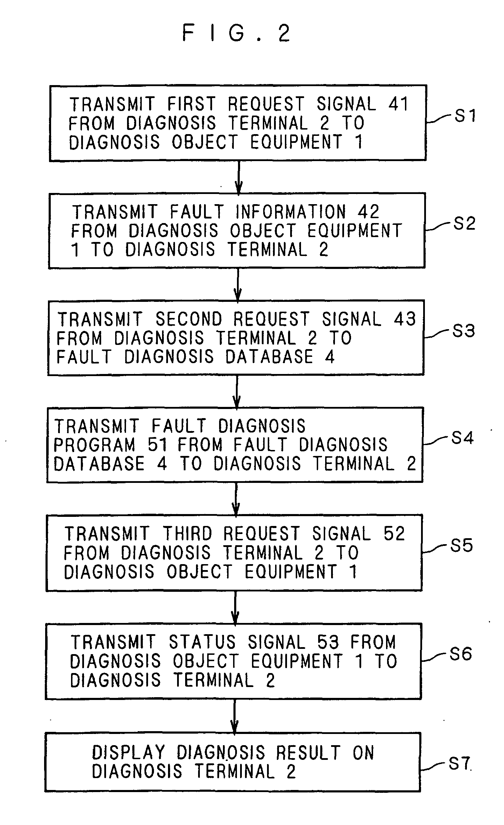

FIG. 1 is a conceptual diagram illustrating a fault diagnosis system according to an embodiment of the present invention. FIG. 2 is a flowchart showing the operation of the fault diagnosis system. In the fault diagnosis system, as a diagnosis object equipment 1 which is an object to be subjected to fault diagnosis, an air conditioner is illustrated. The diagnosis object equipment 1 has an outdoor unit 10 and indoor units 11, 12, ... connected to the outdoor unit 10.

The fault diagnosis system also has a diagnosis terminal 2 and a fault diagnosis database 4 each of which is provided separately from the diagnosis object equipment 1. The diagnosis object equipment 1 and the diagnosis terminal 2 are connected to each other via a communication network 31 so that communication can be performed bidirectionally. The diagnosis terminal 2 is also separate from the fault diagnosis database 4. The diagnosis terminal 2 and the fault diagnosis database 4 are connected to each other via a communication network 32 so that communication can be performed bidirectionally. Alternately, as the communication networks 31 and 32, a communication network can be commonly used.

The user who judges occurrence of a fault in the diagnosis object equipment 1 contacts a service person and asks for fault diagnosis. The service person carries out fault diagnosis on the diagnosis object equipment 1 by using the diagnosis terminal 2 as follows.

The diagnosis terminal 2 transmits a first request signal 41 requesting for fault information 42 as information regarding a fault to the diagnosis object equipment 1 (see step S1 in FIG. 2). The diagnosis object equipment 1 can transmit the fault information 42 and, in response to the first request signal 41, transmits the fault information 42 to the diagnosis terminal 2 (see step S2 in FIG. 2).

The fault information 42 includes, for example, information of identifying the model of the diagnosis object equipment 1 and information of identifying a fault part (such as the compressor of the outdoor unit 10 or the fan of the indoor unit 11) in the diagnosis object equipment 1.

The diagnosis terminal 2 which has received the fault information 42 transmits a second request signal 43 requesting the fault diagnosis database 4 to transmit a fault diagnosis program 51 to the diagnosis terminal 2 on the basis of the fault information 42 (see step S3 in FIG. 2).

The fault diagnosis database 4 stores a plurality of kinds of the fault diagnosis programs 51, which correspond to various models of the diagnosis object equipment 1 and various fault parts, used in diagnosing a fault. The fault diagnosis database 4 transmits the fault diagnosis program 51 corresponding to the fault information 42 to the diagnosis terminal 2 on the basis of the second request signal 43 (see step S4 in FIG. 2).

By the second request signal 43, the fault information 42 is supplied to the fault diagnosis database 4, and a proper fault diagnosis program 51 may be selected in the fault diagnosis database 4. By the second request signal 43, a proper fault diagnosis program 51 stored in the fault diagnosis database 4 may be designated on the basis of the contents of the fault information 42.

For example, when it is indicated by the fault information 42 that a fault part in the diagnosis object equipment 1 is the compressor of the outdoor unit 10, the diagnosis terminal 2 obtains the fault diagnosis program 51 which is adapted to diagnose a fault in the compressor, that is, used in diagnosing the compressor from the fault diagnosis database 4.

The diagnosis terminal 2 diagnoses a fault in the diagnosis object equipment 1 by using the fault diagnosis program 51 obtained by being received from the fault diagnosis database 4 as described above (see steps S5 and S6 in FIG. 2).

In diagnosing a fault in accordance with the fault diagnosis program 51, a third request signal 52 is transmitted from the diagnosis terminal 2 to the diagnosis object equipment 1 (see step S5 in FIG. 2). The third request signal 52 requests for data indicative of the status of the diagnosis object equipment 1 necessary for fault diagnosis, such as temperature and pressure. The diagnosis object equipment 1 transmits a status signal 53 indicative of the requested status of itself to the diagnosis terminal 2 in response to the third request signal 52 (see step S6 in FIG. 2). The diagnosis terminal 2 which has received the status signal 53 continues the fault diagnosis in accordance with the fault diagnosis program 51.

In diagnosing a fault in accordance with the fault diagnosis program 51, there is a case such that the diagnosis terminal 2 performs a test on the fault part. By executing the fault diagnosis program 51 used in diagnosing a fault of the compressor of the outdoor unit 10, a control signal for sequentially operating valves which can operate electrically or mechanically such as an electric valve, an electromagnetic valve and a four-way valve is given from the diagnosis terminal 2 to the outdoor unit 10 as a third request signal. In response to such a request of the fault diagnosis program 51, the components operate, and the status signal 53 is transmitted from the outdoor unit 10 to the diagnosis terminal 2 as data indicating how high pressure and low pressure of the outdoor unit 10, temperature at the inlet and outlet of a condenser, temperature at the inlet and outlet of an evaporator, and the like react. The fault diagnosis program 51 has data in a normal status and compares the status signal 53 with the data in the normal status, thereby diagnosing an abnormal state of the valves, clogging of a pipe, and whether a refrigerant amount is proper or not.

After that, a diagnosis result is displayed on the diagnosis terminal 2 (see step S7 in FIG. 2).

The fault diagnosis system is constructed as described above, a fault is diagnosed by the steps as described above, and the diagnosis terminal 2 is employed as described above and used by the steps as described above, thereby obtaining the following effects.

First, since the diagnosis object equipment 1 is separate from the fault diagnosis database 4, it is unnecessary to provide the diagnosis object equipment 1 with the function of carrying out fault diagnosis. Therefore, the cost of the diagnosis object equipment 1 can be reduced.

Second, since the diagnosis terminal 2 is separate from the fault diagnosis database 4, the diagnosis terminal 2 does not have to store a number of fault diagnosis programs. It is sufficient to obtain the fault diagnosis program 51 necessary for diagnosing the diagnosis object equipment 1 from the fault diagnosis database 4. Therefore, excellent portability and reduction in cost can be realized.

Third, since each of the fault diagnosis database 4 and the diagnosis terminal 2 is separate from the diagnosis object equipment 1, even with respect to diagnosis contents which are not expected to be diagnosed in manufacturing of the diagnosis object equipment 1, a new fault diagnosis program can be employed to carry out fault diagnosis by using the fault diagnosis database 4 and the diagnosis terminal 2. Such a fault diagnosis program can be added or updated for the fault diagnosis database 4 by using a known technique.

Fourth, the diagnosis terminal 2 obtains the fault information 42, transmits the second request signal 43 to the fault diagnosis database 4, and obtains the fault diagnosis program 51. Therefore, the diagnosis terminal 2 can obtain the fault diagnosis program 51 corresponding to a plurality of kinds of diagnosis object equipment and a plurality of kinds of fault parts and can diagnose a fault by using the fault diagnosis program 51.

In the embodiment, a cue of transmission of the first request signal 41 from the diagnosis terminal 2 to the diagnosis object equipment 1 (step S1) is not limited to contact from the user to the service person. For example, when a control unit for monitoring the operating state of the diagnosis object equipment 1 exists and the operating state of the diagnosis object equipment 1 becomes abnormal, the control unit may urge the diagnosis terminal 2 to transmit the first request signal 41.

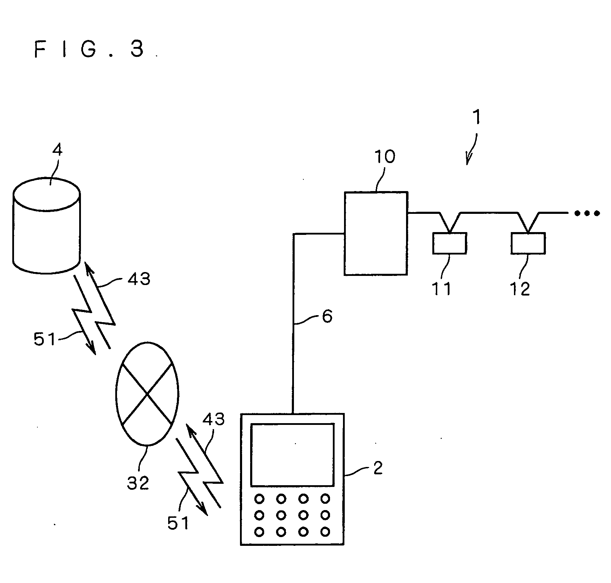

It is also possible to omit the communication network 31. FIG. 3 is a diagram showing a state where the diagnosis terminal 2 is connected to the diagnosis object equipment 1 via a connection line 6 and illustrates a modification of the present embodiment. The service person contacted by the user connects the diagnosis terminal 2 to the diagnosis object equipment 1 via the connection line 6. With the connection as a cue, the first request signal 41 can be transmitted from the diagnosis terminal 2 to the diagnosis object equipment 1 by using a known technique such as "plug and play".

Prediction of occurrence of a fault by using the fault diagnosis program 51 can be also easily realized in the present invention by, for example, properly designing the fault diagnosis program 51.

Further, it is obvious that the present invention can be easily applied to diagnosis of a kind other than a fault. For example, the present invention can be applied to diagnosis of the life of the diagnosis object equipment 1. As a more concrete example, the present invention can be applied to the case of diagnosing the life of the compressor of the outdoor unit 10. The present invention can be also applied to the case of diagnosing whether the diagnosis object equipment 1 needs maintenance or not. As a more concrete example, the present invention can be applied to diagnose the cleaning timing of a heat exchanger, filter exchange timing, and the like of each of the indoor units 11, 12, .... Further, it is also possible to diagnose the operating conditions of the diagnosis object equipment 1 and make a proposal of energy-saving operation on the basis of the diagnosis such as a change in setting of the temperature of air sent from the indoor units 11, 12, ....

While the invention has been shown and described in detail, the foregoing description is in all aspects illustrative and not restrictive. It is therefore understood that numerous modifications and variations can be devised without departing from the scope of the invention.

## Claims

1. A diagnosis system comprising:
a diagnosis object equipment (1), as an object of diagnosis, capable of transmitting diagnosis information (42) as information regarding said diagnosis on said diagnosis object equipment;
a diagnosis database (4), which is separate from said diagnosis object equipment, for storing a plurality of diagnosis programs (51) used in carrying out said diagnosis on said diagnosis object equipment; and
a diagnosis terminal (2), which is separate from said diagnosis object equipment and said diagnosis database, for obtaining said diagnosis program from said diagnosis database on the basis of said diagnosis information, and carrying out said diagnosis by using said diagnosis program.

2. The diagnosis system according to claim 1, wherein
said diagnosis information (42) includes information of identifying a model of said diagnosis object equipment (1), and
said diagnosis program (51) obtained from said diagnosis database (4) to said diagnosis terminal (2) corresponds to said model of said diagnosis object equipment.

3. The diagnosis system according to claim 1, wherein
said diagnosis information (42) includes information of identifying a diagnosis part in said diagnosis object equipment (1), and
said diagnosis program (51) obtained from said diagnosis database (4) to said diagnosis terminal (2) corresponds to said diagnosis part in said diagnosis object equipment.

4. The diagnosis system according to claim 3, wherein
said diagnosis program (51) tests operation of said diagnosis part.

5. The diagnosis system according to any one of claims 1 to 4, wherein
said diagnosis object equipment (1) transmits a status signal (53) indicative of the status of itself to said diagnosis terminal (2) in response to a request from said diagnosis program (51).

6. A diagnosis method comprising steps of:
(a) transmitting information (42) as information regarding diagnosis on a diagnosis object equipment (1) as an object of diagnosis from said diagnosis object equipment to a diagnosis terminal (2) which is separate from said diagnosis object equipment (S2);
(b) sending a request for transmission of a diagnosis program (51) used in carrying out said diagnosis from said diagnosis terminal to a diagnosis database (4) which is separate from each of said diagnosis object equipment and said diagnosis terminal (S3);
(c) transmitting said diagnosis program corresponding to said diagnosis information from said diagnosis database to said diagnosis terminal (S4); and
(d) carrying out said diagnosis by said diagnosis terminal by using said diagnosis program obtained in said step (c) (S5,S6).

7. The diagnosis method according to claim 6, wherein
said diagnosis information (42) includes information of identifying a model of said diagnosis object equipment (1), and
said diagnosis program (51) transmitted from said diagnosis database (4) to said diagnosis terminal (2) corresponds to said model of said diagnosis object equipment.

8. The diagnosis method according to claim 6, wherein
said diagnosis information (42) includes information of identifying a diagnosis part in said diagnosis object equipment (1), and
said diagnosis program (51) transmitted from said diagnosis database (4) to said diagnosis terminal (2) corresponds to said diagnosis part in said diagnosis object equipment.

9. The diagnosis method according to claim 8, wherein
said diagnosis program (51) tests operation of said diagnosis part.

10. The diagnosis method according to any one of claims 6 to 9, wherein
said diagnosis object equipment (1) transmits a status signal (53) indicative of the status of itself to said diagnosis terminal in response to a request from said diagnosis program (51).

11. A diagnosis terminal (2) for receiving diagnosis information (42) as information regarding diagnosis on a diagnosis object equipment (1) from said diagnosis object equipment as an object of said diagnosis,
receiving a diagnosis program obtained on the basis of said diagnosis information from a diagnosis database (4) which is separate from said diagnosis object equipment and stores a plurality of said diagnosis programs (51), and
carrying out said diagnosis on said diagnosis object equipment by using said diagnosis program, wherein
said diagnosis terminal is separate each from said diagnosis object equipment and said diagnosis database.

12. The diagnosis terminal according to claim 11, wherein
said diagnosis information (42) includes information of identifying a model of said diagnosis object equipment (1), and
said diagnosis program (51) obtained from said diagnosis database (4) to said diagnosis terminal (2) corresponds to said model of said diagnosis object equipment.

13. The diagnosis terminal according to claim 11, wherein
said diagnosis information (42) includes information of identifying a diagnosis part in said diagnosis object equipment (1), and
said diagnosis program (51) obtained from said diagnosis database (4) to said diagnosis terminal (2) corresponds to said diagnosis part in said diagnosis object equipment.

14. The diagnosis terminal according to claim 13, wherein
said diagnosis program (51) tests operation of said diagnosis part.

15. The diagnosis terminal according to any of claims 11 to 14, wherein
said diagnosis object equipment (1) transmits a status signal (53) indicative of the status of itself to said diagnosis terminal (2) in response to a request from said diagnosis program (51).

16. A method of using a diagnosis terminal (2) which is separate each from a diagnosis object equipment (1) as an object of diagnosis and a diagnosis database (4) separate from said diagnosis object equipment, comprising steps of:
(a) receiving diagnosis information (42) as information regarding said diagnosis on said diagnosis object equipment (1) from said diagnosis object equipment (S2);
(b) requesting transmission of a diagnosis program (51) used in carrying out said diagnosis to said diagnosis database (S3);
(c) receiving said diagnosis program corresponding to said diagnosis information from said diagnosis database (S4); and
(d) carrying out said diagnosis by using said diagnosis program obtained in step (c) (SS,S6).

17. The method of using a diagnosis terminal according to claim 16, wherein
said diagnosis information (42) includes information of identifying a model of said diagnosis object equipment (1), and
said diagnosis program (51) received from said diagnosis database (4) corresponds to said model of said diagnosis object equipment.

18. The method of using a diagnosis terminal according to claim 16, wherein
said diagnosis information (42) includes information of identifying a diagnosis part in said diagnosis object equipment (1), and
said diagnosis program (51) received from said diagnosis database (4) corresponds to said diagnosis part in said diagnosis object equipment.

19. The method of using a diagnosis terminal according to claim 18, wherein
said diagnosis program (51) tests operation of said diagnosis part.

20. The method of using a diagnosis terminal according to any one of claims 16 to 19, wherein
said diagnosis object equipment (1) transmits a status signal (53) indicative of the status of itself to said diagnosis terminal in response to a request from said diagnosis program (51).
